# EUROPEAN PATENT APPLICATION

(11) **EP 4 620 761 A1**
(43) Date of publication of application: **24.09.2025**
(21) Application number: 24164147.1
(22) Date of filing: 18.03.2024
(51) Int. Cl.: B60W 30/14, B60W 50/00

(54) **A SYSTEM FOR SETTING A VEHICLE SPEED TRAJECTORY IN RESPONSE TO ENERGY CONSUMPTION**

(71) Applicant: VOLVO TRUCK CORPORATION, 405 08 Göteborg (SE)
(72) Inventor: NORDHOLM, Linus, 436 40 ASKIM (SE); HOLMSTRÖM, Anders, 423 37 TORSLANDA (SE); WILHELMSSON, Martin, 423 39 TORSLANDA (SE); SMIDEBRANT, Tobias, 415 51 GÖTEBORG (SE); LINDBERG, Johan, 415 24 GÖTEBORG (SE)
(74) Representative: Kransell & Wennborg KB

(57) **Abstract**

The disclosure relates to computer system comprising processing circuitry configured to determine a start position and an end position for operating a vehicle along an upcoming road path, estimate a first energy consumption for a plurality of vehicle speed trajectories from the start position to the end position, estimate a time period for operating the vehicle for each one of the plurality of vehicle speed trajectories, estimate a second energy consumption for a vehicle speed independent power consumer of the vehicle for each one of the estimated time periods, determine a third energy consumption, the third energy consumption being a sum of the first and second energy consumptions, and set a vehicle speed trajectory for controlling the vehicle speed between the start position and the end position in response to the third energy consumption for the plurality of vehicle speed trajectories and at least one constraint criterion.

## Description

### TECHNICAL FIELD

The disclosure relates generally to vehicle energy management. In particular aspects, the disclosure relates to a system for setting a vehicle speed trajectory in response to energy consumption. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

When, for example, planning a trip or when a vehicle uses a cruise control functionality, the vehicle is conventionally controlled to optimize the energy consumption of a prime mover. Hence, an objective for reducing cost is to run the prime mover as efficient as possible to reduce fuel or energy consumption. The vehicle speed can hereby be controlled in response to the topography as well as to the surrounding traffic conditions.

However, at least a heavy duty vehicle often comprises additional components that requires energy, such as e.g. a freezer, a power take off unit, one or more thermal systems, etc. These additional components are conventionally not considered when planning a trip and there is thus a desired to further improve the energy efficiency when operating the vehicle.

### SUMMARY

According to a first aspect of the disclosure, there is provided a computer system comprising processing circuitry configured to determine a start position and an end position for operating a vehicle along an upcoming road path, estimate, for a prime mover of the vehicle, a first energy consumption for each one of a plurality of vehicle speed trajectories from the start position to the end position, estimate a time period for operating the vehicle during at least a portion of the upcoming road path between the start position and the end position for each one of the plurality of vehicle speed trajectories, estimate a second energy consumption for a vehicle speed independent power consumer of the vehicle for each one of the estimated time periods, determine a third energy consumption for operating the vehicle from the start position to the end position for each one of the plurality of vehicle speed trajectories, the third energy consumption being a sum of the first and second energy consumptions, determine at least one constraint criterion for the vehicle between the start position and the end position, and set a vehicle speed trajectory for controlling the vehicle speed between the start position and the end position in response to the third energy consumption for the plurality of vehicle speed trajectories and the at least one constraint criterion.

The first aspect of the disclosure may seek to improve the overall energy efficiency for a vehicle when operating a mission. A technical benefit may include that energy consumption for the prime mover as well as energy consumption for vehicle speed independent power consumer(s) are determined for a plurality of vehicle speed trajectories to find an optimum overall energy consumption during the travel from the start position to the end position along an upcoming road path. In particular, the vehicle speed independent power consumer should be construed as an energy consumer of the vehicle. As will be described below, the total energy consumption for this vehicle speed independent power consumer is, during a mission, dependent on the time period of usage. The power consumption, i.e. the energy consumption per time unit, will not change if the vehicle is driven at a high vehicle speed or at a low vehicle speed. The prime mover on the other hand will obviously have a higher power consumption if driven at a high vehicle speed compared to when driven at a lower vehicle speed. As such, a lower vehicle speed trajectory will, compared to a higher vehicle speed trajectory, generate a lower first energy consumption but a higher second energy consumption as the vehicle speed independent power consumer will consume energy for a longer duration. In a similar vein, a higher vehicle speed trajectory will generate a higher first energy consumption but a lower second energy consumption as the vehicle speed independent power consumer will consume energy for a shorter duration. By determining the third energy consumption, i.e. the sum of the first and second energy consumptions, for a plurality of vehicle speed trajectories, the processing circuitry can set a vehicle speed trajectory that fulfils the constraint criterion in order to obtain an overall optimum energy consumption for the vehicle. It should be understood that one or more vehicle speed independent power consumer may generate the second energy consumption. In addition, a cooling system may for example receive more wind cooling if the vehicle is operated at a higher speed but should still be construed as a speed independent power consumer due to the small, or negligible, dependency of the vehicle speed.

The definition "vehicle speed trajectory" should be construed as a trajectory of the vehicle speed from the start position to the end position. The vehicle speed trajectory may thus comprise a number of different vehicle speeds along the upcoming road path from the start position to the end position. The different vehicle speeds may be depending on e.g. topography, vehicle speed limitations, etc. The vehicle speed trajectory must hence not be a constant vehicle speed from the start position to the end position, although this can also be a viable option depending on e.g. specifics of the upcoming road path. As such, the processing circuitry determines energy consumptions for the plurality of vehicle speed trajectories, preferably by dividing the road path into segments where each segment is associated with a vehicle speed and time period that generates specific energy consumptions for the prime mover as well as for the vehicle speed independent power consumer. The vehicle speed trajectory set by the processing circuitry may also be referred to as a desired or operational vehicle speed trajectory.

Furthermore, and as may be evident from the above description, the processing circuitry estimates a first energy consumption and a second energy consumption for each of the vehicle speed trajectories. As a non-limiting example, if the processing circuitry evaluates five vehicle speed trajectories, a first energy consumption and a second energy consumption will be estimated for each of these five vehicle speed trajectories.

Moreover, it should be readily understood that the vehicle speed independent power consumer must not necessarily be operated during the entire travel from the start position to the end position. As such, the processing circuitry estimates the time period for at least a portion of the upcoming road path between the start and end positions. This time period is thus the time period during which the vehicle speed independent power consumer is operated, i.e. the time period at which the vehicle speed independent power consumer consumes energy.

Optionally in some examples, including in at least one preferred example, the at least one constraint criterion comprises a time of arrival at the end position. A technical benefit may include that the optimization can take the time of arrival into account. The vehicle may not need to arrive as early as possible if this is determined as generating a high third energy consumption. The time of arrival may comprise a time range at which the vehicle should arrive at the end position. The end position should however not be construed as necessarily being a final end destination, but can be an intermediate position somewhere between the start position and the end destination.

Optionally in some examples, including in at least one preferred example, the time of arrival is a latest acceptable time of arrival at the end position. A technical benefit may include that it can be assured that the vehicle will arrive at the end position on time, with as low energy consumption as possible that fulfils this constraint criterion. In detail, a vehicle speed trajectory generating a low third energy consumption will be discarded if that vehicle speed trajectory causes the vehicle to arrive after the latest acceptable time of arrival at the end position.

Optionally in some examples, including in at least one preferred example, the at least one constraint criterion comprises vehicle speed limitation. A technical benefit may include that the vehicle speed limitation is not exceeded.

Optionally in some examples, including in at least one preferred example, the vehicle speed limitation is at least one legislative vehicle speed limitation along the upcoming road path between the start position and the end position.

Optionally in some examples, including in at least one preferred example, the processing circuitry is configured to set the vehicle speed trajectory to the vehicle speed trajectory generating the third energy consumption with the lowest energy consumption.

Optionally in some examples, including in at least one preferred example, the at least one constraint criterion comprises a minimum charge level of an energy storage system at the end position. A technical benefit may include that it can be assured that the energy storage system has a charge level that is sufficient to e.g. operate the vehicle to a charging station.

Optionally in some examples, including in at least one preferred example, the vehicle speed independent power consumer is different from the prime mover.

Optionally in some examples, including in at least one preferred example, the second energy consumption for the vehicle speed independent power consumer is dependent on a time period of usage. As described above, the time period of usage will be higher for a lower vehicle speed trajectory compared to a higher vehicle speed trajectory.

Optionally in some examples, including in at least one preferred example, the computer system further comprising a cruise control system configured to control vehicle speed, wherein the processing circuitry is configured to instruct the cruise control system to control the vehicle speed to follow the set vehicle speed trajectory. A technical benefit may include that the cruise control system can control the vehicle speed without the interaction from an operator. As described above, a vehicle speed trajectory may include a number of different vehicle speeds between the start position and the end position, whereby the cruise control system can autonomously change the vehicle speed according to the vehicle speed trajectory set by the processing circuitry.

Optionally in some examples, including in at least one preferred example, the processing circuitry is further configured to transmit data to a human machine interface for informing about the set vehicle speed trajectory to an operator of the vehicle. A technical benefit may include that the operator of the vehicle can be instructed to control the vehicle in the optimum manner.

Optionally in some examples, including in at least one preferred example, the vehicle speed independent power consumer comprises a power take off unit. The power take off unit may, for example, be connected to, and consume energy from, the prime mover, either directly or via e.g. a transmission.

Optionally in some examples, including in at least one preferred example, the power take off unit is connected to at least one of a refrigerator body, a concrete mixer and a heated bed for tarmac.

Optionally in some examples, including in at least one preferred example, the power take off unit is connected to, and receives energy from, the prime mover and/or an energy storage system of the vehicle. When the power take off unit is connected to the prime mover, the power take off unit may be either directly connected to the prime mover, or connected to the prime mover via e.g. a transmission.

Optionally in some examples, including in at least one preferred example, the vehicle speed independent power consumer comprises at least one electrically consuming auxiliary load. A technical benefit may include that even further details of the overall energy consumption may be estimated.

Optionally in some examples, including in at least one preferred example, the at least one electrically consuming auxiliary load comprises a vehicle thermal system.

Optionally in some examples, including in at least one preferred example, the vehicle thermal system is configured to control a temperature level inside a vehicle cab.

Optionally in some examples, including in at least one preferred example, the prime mover is at least one of an electric traction motor and an internal combustion engine.

According to a second aspect, there is provided a computer-implemented method, comprising determining, by processing circuitry of a computer system, a start position and an end position for operating a vehicle along an upcoming road path, estimating, by the processing circuitry and for a prime mover of the vehicle, a first energy consumption for each one of a plurality of vehicle speed trajectories from the start position to the end position, estimating, by the processing circuitry, a time period for operating the vehicle during at least a portion of the upcoming road path between the start position and the end position for each one of the plurality of vehicle speed trajectories, estimating, by the processing circuitry, a second energy consumption for a vehicle speed independent power consumer of the vehicle for each one of the estimated time periods, determining, by the processing circuitry, a third energy consumption for operating the vehicle from the start position to the end position for each one of the plurality of vehicle speed trajectories, the third energy consumption being a sum of the first and second energy consumptions, determining, by the processing circuitry, at least one constraint criterion for the vehicle between the start position and the end position, and setting, by the processing circuitry, a vehicle speed trajectory for controlling the vehicle speed between the start position and the end position in response to the third energy consumption and the at least one constraint criterion.

Effects and features of the second aspect are largely analogous to those described above in relation to the first aspect.

According to a third aspect, there is provided a vehicle comprising the computer system according to any one of the examples described above in relation to the first aspect.

According to a fourth aspect, there is provided a computer program product comprising program code for performing, when executed by the processing circuitry, the method of the second aspect.

According to a fifth aspect, there is provided a non-transitory computer-readable storage medium comprising instructions, which when executed by the processing circuitry, cause the processing circuitry to perform the method of the second aspect.

Effects and features of the third, fourth and fifth aspects are largely analogous to those described above in relation to the first aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
Fig. 1 is an exemplary illustration of a vehicle according to an example,
Fig. 2 is an exemplary illustration of the vehicle before being operated along an upcoming road path,
Fig. 3 is an exemplary matrix defining energy consumptions for different vehicle speed trajectories according to an example,
Fig. 4 is an exemplary diagram presenting the relationship between energy consumption and vehicle speed trajectories according to an example,
Fig. 5 is an exemplary flow chart for setting a vehicle speed trajectory according to an example, and
Fig. 6 is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

The following disclosure aims at optimizing the energy consumption for a vehicle between a start position and an end position of an upcoming road path while fulfilling at least one constraint criterion.

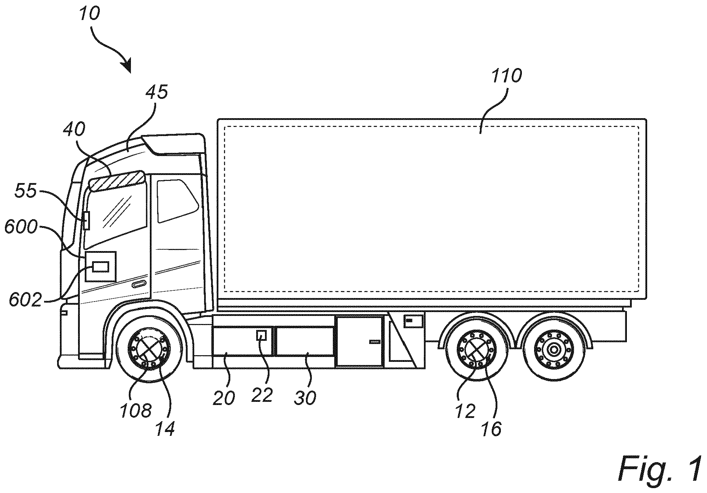

Turning to Fig. 1 which is an exemplary illustration of a vehicle 10 according to an example. The vehicle 10 comprises a prime mover 108 for propelling the vehicle 10. In Fig. 1, the prime mover is exemplified as one or more electric traction motors, arranged as wheel hub motors connected to the pair of front wheels 14 as well as to the foremost pair of rear wheels 16. The electric traction motor 12 is configured to apply a propulsive power to the wheels of the vehicle during propulsion, and to generate electric power during braking. The prime mover may however equally as well be an internal combustion engine, or be a combination of an electric traction motor and an internal combustion engine.

The exemplified vehicle 10 further comprises an energy storage system 20, also referred to a high-voltage energy storage system 20 or a high-voltage vehicle battery. The high-voltage energy storage system 20 is configured to feed electric power to the electric traction motor 12 during propulsion of the vehicle 10 and to receive electric power during braking. The high-voltage energy storage system 20 can be charged externally at a charge socket 22. In further detail, the high-voltage energy storage system 20 can be charge at a charging station by attaching a charge plug of a charging cable to the charge socket 22.

According to a non-limiting example, the vehicle 10 may also comprise a fuel cell 30 configured to generate electric energy, which electric energy can be fed to the high-voltage energy storage system 20 during operation of the vehicle 10, or when the vehicle 10 is standing still. Such fuel cell 30 preferably generates electric energy during a chemical reaction of hydrogen and oxygen. Thus, the vehicle 10 preferably comprises a gas tank (not shown) comprising hydrogen gas to be fed to the fuel cell. Hence, the high-voltage energy storage system 20 can be charged while the vehicle 10 is being driven.

The vehicle 10 further comprises a speed independent power consumer 110. The speed independent power consumer 110 is an energy consumer arranged in the vehicle 10, which speed independent power consumer 110 is different from the prime mover 108. The total energy consumption of the speed independent power consumer 110 for a mission of the vehicle 10 is dependent on the time period it is operated, i.e. the vehicle speed independent power consumer is dependent on a time period of usage. Thus, if the mission is completed rapidly due to the vehicle 10 is driving at a high speed, the total energy consumption will be reduced compared to a more time consuming mission. Accordingly, the energy consumption, but not the power consumption, of the speed independent power consumer 110 is affected by the vehicle speed. The vehicle speed independent power consumer may comprise a power take off unit connected to e.g. a refrigerator body which is illustrated in Fig. 1. The power take off unit may alternatively, or additionally, be connected to a concrete mixer, heated bed for tarmac, etc. Power is thus feed from the power take off unit to the component(s) it is connected to. The power take off unit may receive energy from, the prime mover 108 and/or the energy storage system 20. The power take off unit may thus be connected to the prime mover and/or energy storage system to receive energy therefrom. As an alternative, or as a completement, the vehicle speed independent power consumer 110 may comprise at least one electrically consuming auxiliary load, such as e.g. vehicle thermal system 40 configured to control a temperature level inside a vehicle cab 45 of the vehicle 10.

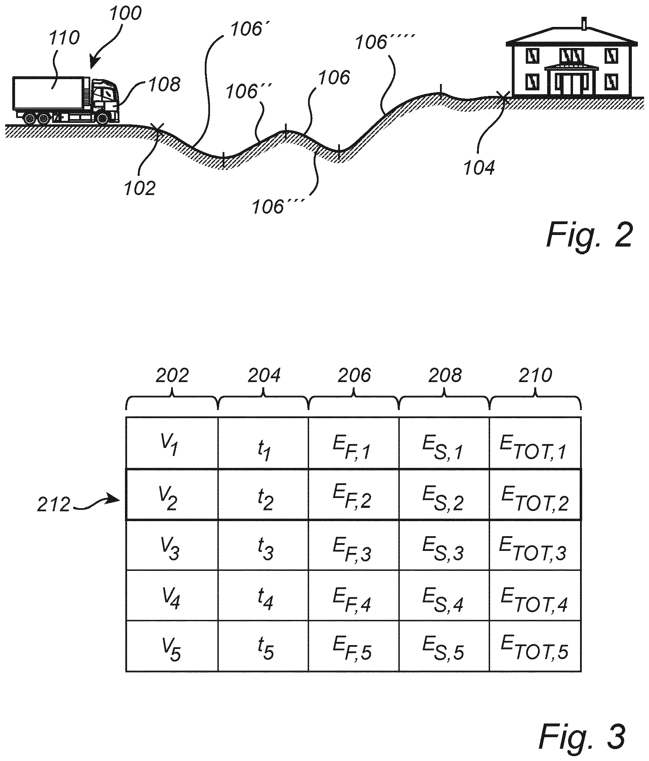

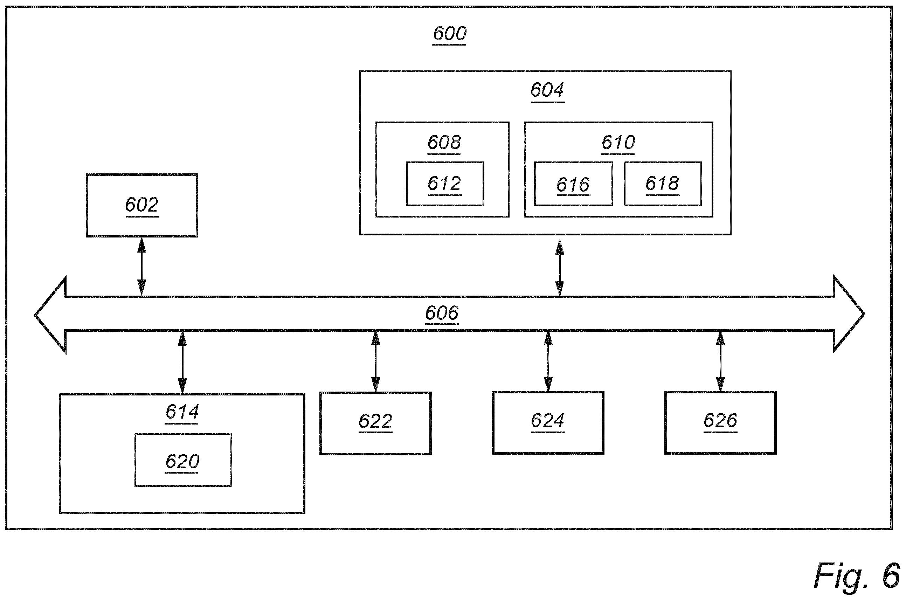

Furthermore, the vehicle 10 also comprises a computer system 600. The computer system 600 comprises processing circuitry 602 which, amongst other things, is configured to set a vehicle speed trajectory (212 in Fig. 3) for controlling the vehicle speed between a start position and an end position along an upcoming road. The vehicle speed trajectory is preferably set to optimize energy consumption for the vehicle given one or more constraint criteria. Exemplified details of the computer system 600 and the processing circuitry 602 will be given below in relation to the description of Fig. 6.

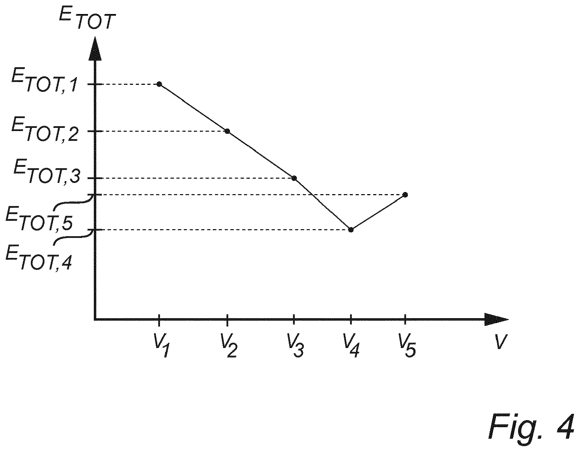

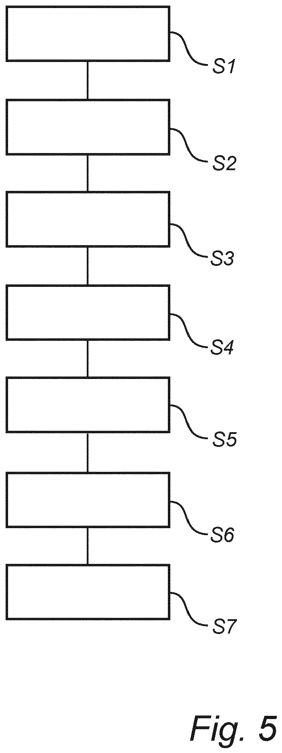

In order to describe the control strategy for setting the vehicle speed trajectory, reference is made to Figs. 2-5, where Fig. 2 is an exemplary illustration of the vehicle before being operated along an upcoming road path, Fig. 3 is an exemplary matrix defining energy consumptions for different vehicle speed trajectories according to an example, and Fig. 4 is an exemplary diagram presenting the relationship between energy consumption and vehicle speed trajectories according to an example. Fig. 5 is an exemplary flow chart for setting a vehicle speed trajectory according to an example.

Before, or during, operation of the vehicle 10, a start position 102 and an end position 104 for operating the vehicle along an upcoming road path 106 is determined S1 by the processing circuitry 602. In the specific example, the end position 104 is an end destination for a mission of the vehicle 10, but can be another position along the upcoming road path 106. The road path from the start position 102 to the end position 104 is preferably associated with a road topography comprising uphill portions as well as downhill portions, which road topography may be acquired from e.g. map data in combination with a GPS.

The road path between the start position 102 to the end position 104 can be operated at various vehicle speed trajectories, where a vehicle speed trajectory can be seen as a vehicle speed profile along a road path. Also, the road path 106 can be divided into a plurality of road path sections 106', 106", 106‴, 106ʺʺ, where the vehicle speed trajectory for the entire road path may comprise different vehicle speeds or speed profiles for each road path section. Each road path section may have different characteristics, such as e.g. topography, curvature, speed limit, etc. Hence, a vehicle speed trajectory may comprise different vehicle speeds along the road path. For example, the vehicle speed trajectory may comprise a vehicle speed for operating the vehicle 10 along a certain uphill slope, and another vehicle speed for operating the vehicle at a downhill slope. Also, various speed limitations along the road path may be associated with different vehicle speeds forming the vehicle speed trajectory.

For a plurality of vehicle speed trajectories 202, the processing circuitry 602 estimates S2 a first energy consumption 206 from the start position to the end position 104. Each of the first energy consumptions 206 is an energy consumption for the prime mover 108 for a specific vehicle speed trajectory. A higher vehicle speed trajectory will generate a higher first energy consumption compared to a lower vehicle speed trajectory since the power consumption of a prime mover 108 is dependent on vehicle speed. In the example depicted in Fig. 3, a first V₁, a second V₂, a third V₃, a fourth V₄ and a fifth V₅ vehicle speed trajectory 202 are evaluated. Also, a plurality of first energy consumptions 206 is estimated. In detail, for each of the vehicle speed trajectories, a corresponding first energy consumption E_{F,1} - E_{F,5} is estimated. Hence, the second first energy consumption E_{F,2} corresponds to the first energy consumptions associated with the second vehicle speed trajectory V₂. For an internal combustion engine, the first energy consumption may be expressed in the fuel consumption, and for an electric traction motor the first energy consumption may be expressed in the electric energy that is consumed.

Different vehicle speed trajectories 206 is associated with different time periods for operating the vehicle 10 from the start position 102 to the end position 104. The time period is, as indicated above, affecting the total energy consumption for the vehicle speed independent power consumer 110. For each of the plurality of vehicle speed trajectories 202, the processing circuitry 602 estimates S3 a time period 204 for operating the vehicle 10 during at least a portion of the upcoming road path between the start position 102 and the end position 104. In particular, the processing circuitry 602 may determine, for each of the plurality of vehicle speed trajectories 202, a time period when the vehicle speed independent power consumer consumes energy. In particular, the vehicle speed independent power consumer 110 may not necessarily be operated to consume energy during the entire road path from the start position 102 to the end position 104. On the contrary, the vehicle speed independent power consumer 110 may, as an alternative, be turned on to consume energy during a portion of the road path. In the exemplified illustration of Fig. 3, a first t₁, a second t₂, a third t₃, a fourth t₄ and a fifth t₅ time period are estimated, each time period being associated with a vehicle speed trajectory.

As elaborated upon above, the energy consumption of the vehicle speed independent power consumer 110 is dependent on its time period of usage. The processing circuitry can therefore estimate S4 a plurality of second energy consumptions 208. In particular, the processing circuitry 602 determines, for each of the estimated time periods 204, a second energy consumption. In the example depicted in Fig. 3, a first E_{S,1}, a second E_{S,2}, a third E_{S,3}, a fourth E_{S,4}, and a fifth E_{S,5} second energy consumption are illustrated. Hence, and for example, the third second energy consumption E_{S,3} corresponds to the second energy consumption associated during the third time period T₃.

By determining the plurality of first 206 and second 208 energy consumptions, the processing circuitry 602 determines S5 a third energy consumption 210 for operating the vehicle 10 from the start position 102 to the end position 104. In particular, a third energy consumption 210 is determined for each of the plurality of vehicle speed trajectories 202 and is the sum of corresponding first 206 and second 208 energy consumptions. In further detail, for each vehicle speed trajectory, a total energy consumption for the vehicle is determined, which total energy consumption is the third energy consumption. In the example depicted in Fig. 3, a first E_{TOT,1}, a second E_{TOT,2}, a third E_{TOT,3}, a fourth E_{TOT,4} and a fifth E_{TOT5} third energy consumptions are determined.

As can be seen in Fig. 4, the fourth vehicle speed trajectory V₄ is in the exemplification determined to generate the lowest third energy consumption E_{TOT,4}. However, the processing circuitry 602 also determines S6 at least one constraint criterion for the vehicle 10 from the start position 102 to the end position 104. In response to the determined plurality of third energy consumptions 210 and the constraint criterion, the processing circuitry 602 sets S7 a vehicle speed trajectory 212 for controlling the vehicle speed between the start position 102 and the end position 104. In the example depicted in Fig. 3, the second vehicle speed trajectory V₂ is set as the vehicle speed trajectory between the start position 102 and the end position 104. The skilled reader can identify that the vehicle speed trajectory generating the lowest energy consumption is in this example not selected. This is primarily due to the constraint criterion which will be described in further detail below.

The constraint criterion may be, for example, a time of arrival at the end position. For example, the vehicle 10 may be allowed to arrive at a time span at the end position. In the example depicted in Fig. 4, the third V₃, fourth V₄ and fifth V₅ may be determined to cause the vehicle to arrive at the end position at a point in time falling outside this time span. However, the first V₁ and second V₂ vehicle speed trajectories causes the vehicle to arrive at a point in time falling within the time span, where the second vehicle speed trajectory V₂ generates a lower third energy consumption E_{TOT,2} compared to the third energy consumption E_{TOT,1} for the first vehicle speed trajectory V₁. As such, the second vehicle speed trajectory V₂ is set as the vehicle speed trajectory for controlling the vehicle speed from the start position 102 to the end position 104.

The constraint criterion may also be a latest acceptable time of arrival at the end position. Alternatively, or additionally, the at least one constraint criterion may comprise a vehicle speed limitation, such as e.g. a legislative vehicle speed limitation along the upcoming road path between the start position and the end position. As such, a vehicle speed trajectory may be disregarded if it causes the vehicle 10 to exceed the speed limit at portions along the road path between the start position 102 and the end position 104.

As a still further example, the constraint criterion may be a minimum state of charge level of the energy storage system at the end position 104. In detail, it may be desirable to have a certain charge level available at the end position to be able to operate the vehicle 10 to an upcoming charging station. In such example, a vehicle speed trajectory that causes the energy storage system to be rapidly depleted can be disregarded when setting the vehicle speed trajectory.

Furthermore, the processing circuitry 602 may be configured to instruct a cruise control system of the computer system 600 to control the vehicle speed according to the vehicle speed trajectory 212 set by the processing circuitry 602. Hereby, the cruise control system autonomously controls the vehicle speed along the road path according to the vehicle speed trajectory set by the processing circuitry. As an alternative, the processing circuitry 602 may transmit data to a human machine interface (55 in Fig. 1). Hereby, an operator of the vehicle 10 can obtain information about a recommended vehicle speed trajectory to propel the vehicle between the start position 102 and the end position 104.

Fig. 6 is a schematic diagram of a computer system 600 for implementing examples disclosed herein. The computer system 600 is adapted to execute instructions from a computer-readable medium to perform these and/or any of the functions or processing described herein. The computer system 600 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 600 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc. The processing circuitry may also be a cloud based circuitry.

The computer system 600 may comprise at least one computing device or electronic device capable of including firmware, hardware, and/or executing software instructions to implement the functionality described herein. The computer system 600 may include processing circuitry 602 (e.g., processing circuitry including one or more processor devices or control units), a memory 604, and a system bus 606. The computer system 600 may include at least one computing device having the processing circuitry 602. The system bus 606 provides an interface for system components including, but not limited to, the memory 604 and the processing circuitry 602. The processing circuitry 602 may include any number of hardware components for conducting data or signal processing or for executing computer code stored in memory 604. The processing circuitry 602 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 602 may further include computer executable code that controls operation of the programmable device.

The system bus 606 may be any of several types of bus structures that may further interconnect to a memory bus (with or without a memory controller), a peripheral bus, and/or a local bus using any of a variety of bus architectures. The memory 604 may be one or more devices for storing data and/or computer code for completing or facilitating methods described herein. The memory 604 may include database components, object code components, script components, or other types of information structure for supporting the various activities herein. Any distributed or local memory device may be utilized with the systems and methods of this description. The memory 604 may be communicably connected to the processing circuitry 602 (e.g., via a circuit or any other wired, wireless, or network connection) and may include computer code for executing one or more processes described herein. The memory 604 may include non-volatile memory 608 (e.g., read-only memory (ROM), erasable programmable read-only memory (EPROM), electrically erasable programmable read-only memory (EEPROM), etc.), and volatile memory 610 (e.g., random-access memory (RAM)), or any other medium which can be used to carry or store desired program code in the form of machine-executable instructions or data structures and which can be accessed by a computer or other machine with processing circuitry 602. A basic input/output system (BIOS) 612 may be stored in the non-volatile memory 608 and can include the basic routines that help to transfer information between elements within the computer system 600.

The computer system 600 may further include or be coupled to a non-transitory computer-readable storage medium such as the storage device 614, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 614 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 614 and/or in the volatile memory 610, which may include an operating system 616 and/or one or more program modules 618. All or a portion of the examples disclosed herein may be implemented as a computer program 620 stored on a transitory or non-transitory computer-usable or computer-readable storage medium (e.g., single medium or multiple media), such as the storage device 614, which includes complex programming instructions (e.g., complex computer-readable program code) to cause the processing circuitry 602 to carry out actions described herein. Thus, the computer-readable program code of the computer program 620 can comprise software instructions for implementing the functionality of the examples described herein when executed by the processing circuitry 602. In some examples, the storage device 614 may be a computer program product (e.g., readable storage medium) storing the computer program 620 thereon, where at least a portion of a computer program 620 may be loadable (e.g., into a processor) for implementing the functionality of the examples described herein when executed by the processing circuitry 602. The processing circuitry 602 may serve as a controller or control system for the computer system 600 that is to implement the functionality described herein.

The computer system 600 may include an input device interface 622 configured to receive input and selections to be communicated to the computer system 600 when executing instructions, such as from a keyboard, mouse, touch-sensitive surface, etc. Such input devices may be connected to the processing circuitry 602 through the input device interface 622 coupled to the system bus 606 but can be connected through other interfaces, such as a parallel port, an Institute of Electrical and Electronic Engineers (IEEE) 1394 serial port, a Universal Serial Bus (USB) port, an IR interface, and the like. The computer system 600 may include an output device interface 624 configured to forward output, such as to a display, a video display unit (e.g., a liquid crystal display (LCD) or a cathode ray tube (CRT)). The computer system 600 may include a communications interface 626 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

### EXAMPLE LIST

Example 1. A computer system comprising processing circuitry configured to: determine a start position and an end position for operating a vehicle along an upcoming road path, estimate, for a prime mover of the vehicle, a first energy consumption for each one of a plurality of vehicle speed trajectories from the start position to the end position, estimate a time period for operating the vehicle during at least a portion of the upcoming road path between the start position and the end position for each one of the plurality of vehicle speed trajectories, estimate a second energy consumption for a vehicle speed independent power consumer of the vehicle for each one of the estimated time periods, determine a third energy consumption for operating the vehicle from the start position to the end position for each one of the plurality of vehicle speed trajectories, the third energy consumption being a sum of the first and second energy consumptions, determine at least one constraint criterion for the vehicle between the start position and the end position, and set a vehicle speed trajectory for controlling the vehicle speed between the start position and the end position in response to the third energy consumption for the plurality of vehicle speed trajectories and the at least one constraint criterion.

Example 2. The computer system of example 1, wherein the at least one constraint criterion comprises a time of arrival at the end position.

Example 3. The computer system of example 2, wherein the time of arrival is a latest acceptable time of arrival at the end position.

Example 4. The computer system of any one of examples 2 or 3, wherein the at least one constraint criterion comprises vehicle speed limitation.

Example 5. The computer system of example 4, wherein the vehicle speed limitation is at least one legislative vehicle speed limitation along the upcoming road path between the start position and the end position.

Example 6. The computer system of any one of the preceding examples, wherein the processing circuitry is configured to set the vehicle speed trajectory to the vehicle speed trajectory generating the third energy consumption with the lowest energy consumption.

Example 7. The computer system of any one of the preceding examples, wherein the at least one constraint criterion comprises a minimum charge level of an energy storage system at the end position.

Example 8. The computer system of any one of the preceding examples, wherein the vehicle speed independent power consumer is different from the prime mover.

Example 9. The computer system of any one of the preceding examples, wherein the second energy consumption for the vehicle speed independent power consumer is dependent on a time period of usage.

Example 10. The computer system of any one of the preceding examples, the computer system further comprising a cruise control system configured to control vehicle speed, wherein the processing circuitry is configured to: instruct the cruise control system to control the vehicle speed to follow the set vehicle speed trajectory.

Example 11. The computer system of any one of the preceding examples, wherein the processing circuitry is further configured to: transmit data to a human machine interface for informing about the set vehicle speed trajectory to an operator of the vehicle.

Example 12. The computer system of any one of the preceding examples, wherein the vehicle speed independent power consumer comprises a power take off unit.

Example 13. The computer system of example 12, wherein the power take off unit is connected to at least one of a refrigerator body, a concrete mixer and a heated bed for tarmac.

Example 14. The computer system of any one of examples 12 or 13, wherein the power take off unit is connected to, and receives energy from, the prime mover and/or an energy storage system of the vehicle.

Example 15. The computer system of any one of the preceding examples, wherein the vehicle speed independent power consumer comprises at least one electrically consuming auxiliary load.

Example 16. The computer system of example 15, wherein the at least one electrically consuming auxiliary load comprises a vehicle thermal system.

Example 17. The computer system of example 16, wherein the vehicle thermal system is configured to control a temperature level inside a vehicle cab.

Example 18. The computer system of any one of the preceding examples, wherein the prime mover is at least one of an electric traction motor and an internal combustion engine.

Example 19. A computer-implemented method, comprising: determining, by processing circuitry of a computer system, a start position and an end position for operating a vehicle along an upcoming road path, estimating, by the processing circuitry and for a prime mover of the vehicle, a first energy consumption for each one of a plurality of vehicle speed trajectories from the start position to the end position, estimating, by the processing circuitry, a time period for operating the vehicle during at least a portion of the upcoming road path between the start position and the end position for each one of the plurality of vehicle speed trajectories, estimating, by the processing circuitry, a second energy consumption for a vehicle speed independent power consumer of the vehicle for each one of the estimated time periods, determining, by the processing circuitry, a third energy consumption for operating the vehicle from the start position to the end position for each one of the plurality of vehicle speed trajectories, the third energy consumption being a sum of the first and second energy consumptions, determining, by the processing circuitry, at least one constraint criterion for the vehicle between the start position and the end position, and setting, by the processing circuitry, a vehicle speed trajectory for controlling the vehicle speed between the start position and the end position in response to the third energy consumption and the at least one constraint criterion.

Example 20. A vehicle comprising the computer system according to any one of examples 1 - 18.

Example 21. A computer program product comprising program code for performing, when executed by the processing circuitry, the method of example 19.

Example 22. A non-transitory computer-readable storage medium comprising instructions, which when executed by the processing circuitry, cause the processing circuitry to perform the method of example 19.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system comprising processing circuitry configured to:
- determine a start position (102) and an end position (104) for operating a vehicle (10) along an upcoming road path (106),
- estimate, for a prime mover (108) of the vehicle (10), a first energy consumption (206) for each one of a plurality of vehicle speed trajectories (202) from the start position (102) to the end position (104),
- estimate a time period (204) for operating the vehicle (10) during at least a portion of the upcoming road path between the start position (102) and the end position (104) for each one of the plurality of vehicle speed trajectories (202),
- estimate a second energy consumption (208) for a vehicle speed independent power consumer (110) of the vehicle (10) for each one of the estimated time periods,
- determine a third energy consumption (210) for operating the vehicle from the start position to the end position for each one of the plurality of vehicle speed trajectories (202), the third energy consumption being a sum of the first and second energy consumptions,
- determine at least one constraint criterion for the vehicle between the start position and the end position, and
- set a vehicle speed trajectory (212) for controlling the vehicle speed between the start position and the end position in response to the third energy consumption for the plurality of vehicle speed trajectories and the at least one constraint criterion.

2. The computer system of claim 1, wherein the at least one constraint criterion comprises a time of arrival at the end position.

3. The computer system of claim 2, wherein the at least one constraint criterion comprises vehicle speed limitation.

4. The computer system of any one of the preceding claims, wherein the processing circuitry is configured to set the vehicle speed trajectory to the vehicle speed trajectory generating the third energy consumption with the lowest energy consumption.

5. The computer system of any one of the preceding claims, wherein the at least one constraint criterion comprises a minimum charge level of an energy storage system at the end position.

6. The computer system of any one of the preceding claims, wherein the second energy consumption for the vehicle speed independent power consumer is dependent on a time period of usage.

7. The computer system of any one of the preceding claims, the computer system further comprising a cruise control system configured to control vehicle speed, wherein the processing circuitry is configured to:
- instruct the cruise control system to control the vehicle speed to follow the set vehicle speed trajectory.

8. The computer system of any one of the preceding claims, wherein the processing circuitry is further configured to:
- transmit data to a human machine interface for informing about the set vehicle speed trajectory to an operator of the vehicle.

9. The computer system of any one of the preceding claims, wherein the vehicle speed independent power consumer comprises a power take off unit.

10. The computer system of claim 9, wherein the power take off unit is connected to at least one of a refrigerator body, a concrete mixer and a heated bed for tarmac.

11. The computer system of any one of the preceding claims, wherein the vehicle speed independent power consumer comprises at least one electrically consuming auxiliary load.

12. A computer-implemented method, comprising:
- determining (S1), by processing circuitry of a computer system, a start position (102) and an end position (104) for operating a vehicle (10) along an upcoming road path (106),
- estimating (S2), by the processing circuitry and for a prime mover (108) of the vehicle (10), a first energy consumption (206) for each one of a plurality of vehicle speed trajectories (202) from the start position (102) to the end position (104),
- estimating (S3), by the processing circuitry, a time period (204) for operating the vehicle (10) during at least a portion of the upcoming road path between the start position (102) and the end position (104) for each one of the plurality of vehicle speed trajectories (202),
- estimating (S4), by the processing circuitry, a second energy consumption (208) for a vehicle speed independent power consumer (110) of the vehicle (10) for each one of the estimated time periods,
- determining (S5), by the processing circuitry, a third energy consumption (210) for operating the vehicle from the start position to the end position for each one of the plurality of vehicle speed trajectories (202), the third energy consumption being a sum of the first and second energy consumptions,
- determining (S6), by the processing circuitry, at least one constraint criterion for the vehicle between the start position and the end position, and
- setting (S7), by the processing circuitry, a vehicle speed trajectory (212) for controlling the vehicle speed between the start position and the end position in response to the third energy consumption and the at least one constraint criterion.

13. A vehicle comprising the computer system according to any one of claims 1-11.

14. A computer program product comprising program code for performing, when executed by the processing circuitry, the method of claim 12.

15. A non-transitory computer-readable storage medium comprising instructions, which when executed by the processing circuitry, cause the processing circuitry to perform the method of claim 12.
